# EUROPÄISCHE PATENTSCHRIFT

(11) **EP 0 427 938 B1**
(45) Veröffentlichungstag und Bekanntmachung des Hinweises auf die Patenterteilung: **23.03.1994**
(21) Anmeldenummer: 90117522.4
(22) Anmeldetag: 11.09.1990
(51) Int. Cl.: C01G 25/02, C04B 35/48

(54) **Verfahren zur Herstellung von Zirkondioxidpulver**
Process for the preparation of Zirconium dioxide powder
Procédé de préparation de poudre de dioxyde de zirconium

(30) Priorität: 11.11.1989 DE 3937640
(43) Veröffentlichungstag der Anmeldung: 22.05.1991
(73) Patentinhaber: HÜLS AKTIENGESELLSCHAFT, 45764 Marl (DE)
(72) Erfinder: Scharf, Helmut, Dr., D-2960 Aurich (DE)

(56) Entgegenhaltungen:
- PATENT ABSTRACTS OF JAPAN, Band 11, Nr. 159 (C-423)[2606], 22. Mai 1987; & JP-A-61 289 130 (TORAY IND. INC.) 19-12-1985
- PATENT ABSTRACTS OF JAPAN, Band 12, Nr. 479 (C-552)[3326], 14. Dezember 1988; & JP-A-63 195 101 (TOSOH CORP.) 12-08-1988
- ZEITSCHRIFT FÜR NATURFORSCHUNG, Band 31B, 1976, Seiten 300-306; R.C. PAUL et al.: "Zirconium and oxozirconium(IV) formates"

## Beschreibung

Zirkondioxid wird aufgrund seiner guten Eigenschaften in zunehmendem Maße als Konstruktionswerkstoff für Sinterkörper eingesetzt, die hohen mechanischen, thermischen und chemischen Anforderungen gerecht werden müssen. Das für diese Sinterkörper verwendete ZrO₂-Pulver wird in der Regel in teil- oder vollstabilisierter Form eingesetzt. Um diese Stabilisierung zu erreichen, wird das Zirkondioxidpulver mit anderen Oxiden, wie z. B. Y₂O₃, CeO₂, Oxide der Seltenen Erden, CaO, MgO oder Gemische dieser Oxide, dotiert. Damit die aus dem teil- oder vollstabilisierten ZrO₂, z. B. durch Pressen oder Schlickerguß, hergestellten Grünlinge das gewünschte Sinterverhalten und die gesinterten Formkörper die angestrebten guten mechanischen, thermischen und chemischen Eigenschaften aufweisen, ist es notwendig, daß das zudosierte Oxid möglichst gleichmäßig in dem ZrO₂-Gitter verteilt ist. Für eine gute Verarbeitbarkeit muß das Pulver außerdem fließfähig sein, und sollten die Pulverteilchen aus lockeren Agglomeraten bestehen.

Bei der Herstellung hochwertiger Zirkondioxidpulver wird in der Technik von wäßrigen Zirkonsulfat- oder Zirkonylchloridlösungen ausgegangen, aus denen mit Ammoniak oder Ammoniak-abgebenden Verbindungen basisches Zirkonhydroxid bzw. Zirkonoxidaquat gefällt wird. Der durch Filtration abgetrennte und gewaschene Niederschlag wird anschließend calciniert und gemahlen. Nachteilig bei diesen Verfahren ist, daß die anfallenden Hydroxid-Niederschläge schwer filtrierbar sind und die calcinierten Produkte harte Agglomerate darstellen.

In der europäischen Patentschrift 0 251 538 wird ein wäßriges Verfahren beschrieben, bei dem eine wäßrige Lösung von Zirkonylchlorid über einen längeren Zeitraum bei Temperaturen unterhalb des Siedepunktes des Wassers erwärmt wird. Das gebildete Zirkonhydroxid wird von der Lösung abgetrennt, gewaschen und calciniert. Die Abtrennung des sehr feinen Hydroxid-Niederschlages von der Lösung ist sehr schwierig, und das erhaltene ZrO₂ ist nicht stabilisiert. Um es zu stabilisieren, müssen die Partikel nach der Calcinierung resuspendiert und durch eine alkalische Fällung mit dem Hydroxid des Stabilisators belegt werden. Nach der Abtrennung von der Lösung wird das Produkt erneut calciniert. Durch diese zusätzlichen Verfahrensschritte wird das Verfahren noch schwieriger.

Eine andere Darstellungsmethode für Zirkondioxidpulver besteht in der Hydrolyse von Zirkonalkoxiden (Zr(OR₄), R = linearer oder verzweigter Kohlenwasserstoffrest). Die Abtrennung und Aufarbeitung des gebildeten Zirkonhydroxid-Niederschlages erfolgt wie bei den anderen wäßrigen Verfahren. Diese Methode hat ebenfalls die bei den wäßrigen Verfahren vorhandenen Nachteile. Hinzu kommt, daß die Alkoxide zunächst aus Zirkontetrachlorid hergestellt werden müssen.

R.Ch. Paul, O.B. Baidya, R. Kapoor [Z. Naturforschg. 31 b, 300 - 303 (1976)] stellten aus ZrCl₄ und wasserfreier Ameisensäure Zirkontetraformiat [Zr(OOCH)₄] und aus wasserfreiem ZrOCl₂ und wasserfreier Ameisensäure Zirkonoxydiformiat-Dihydrat [ZrO(OOCH)₂ x 2H₂O] her. Zur quantitativen Zirkon-Bestimmung wurden beide Verbindungen thermisch zu ZrO₂ zersetzt. Es ist nicht bekannt, ob unter diesen Bedingungen ein preß- und sinterfähiges ZrO₂-Pulver erhalten werden kann. Für die Entwicklung eines technischen Verfahrens zur Herstellung von ZrO₂-Pulvern auf Basis der thermischen Zersetzung von ZrO(OOCH)₂ x 2H₂O müßte gemäß der Vorschrift zunächst ZrOCl₂ x 8H₂O mit Thionylchlorid entwässert, das gebildete wasserfreie ZrOCl₂ mit wasserfreier Ameisensäure 14 bis 18 ks umgesetzt, das entstehende Zirkonoxydiformiat-Dihydrat abfiltriert, mit Dichlormethan gewaschen und schließlich getrocknet werden, bevor das Oxyformiat calciniert werden könnte. Dieses Verfahren wäre umständlich und würde ein Zirkondioxid-Pulver liefern, das nicht stabilisiert wäre. Eine nachträgliche Stabilisierung des ZrO₂-Pulvers würde die bereits beschriebenen Nachteile mit sich bringen.

Es war daher Aufgabe der vorliegenden Erfindung, ein einfaches und kostengünstiges Verfahren zur Herstellung von in der Regel stabilisierten Zirkondioxid-Pulvern zu entwickeln, das die geschilderten Nachteile vermeidet und zu mikrokristallinen Pulvern führt, die die in der Regel enthaltenen Stabilisatoren in homogener Verteilung enthalten sowie gute Fließ-, Preß-, Spritz- und Sintereigenschaften besitzen.

Diese Aufgabe wird durch die in den Ansprüchen beschriebenen Maßnahmen gelöst.

Es wurde überraschenderweise gefunden, daß kristallwasserhaltiges Zirkonylchlorid der Formel ZrOCl₂ x 8H₂O unter bestimmten Voraussetzungen in konzentrierter Ameisensäure bei Temperaturen in der Nähe des Siedepunktes der Ameisensäure gelöst, in der Regel in der Lösung mit einem Stabilisator oder seines Precursors versetzt und durch Abdampfen von Ameisensäure, Wasser und Chlorwasserstoff in einen Rückstand überführt werden kann, der direkt bei höheren Temperaturen zu einem Zirkondioxid-Pulver calciniert werden kann, das gegebenenfalls nach einem Mahlschritt und gegebenenfalls Sieben zu gut sinterfähigen Formkörpern verarbeitbar ist.

Es war bisher nicht bekannt, daß sich ZrOCl₂ x 8H₂O in konzentrierter Ameisensäure lösen läßt. Es wurde überraschenderweise gefunden, daß sich kristallwasserhaltiges Zirkonylchlorid der Formel ZrOCl₂ x 8H₂O in heißer Ameisensäure lösen läßt, wenn bestimmte Konzentrationsverhältnisse eingehalten werden. Das Vorliegen einer Lösung ermöglicht es, in der Regel einen Stabilisator oder seinen Precursor in der Lösung aufzulösen, bzw. eine fertige Ameisensäure-Lösung des Stabilisators oder seines Precursors hinzuzugeben, und so eine homogene Verteilung des Stabilisators zu erreichen und eine nachträgliche Imprägnierung eines fertigen ZrO₂-Pulvers mit dem Stabilisator zu vermeiden.

Wird festes ZrOCl₂ x 8H₂O portionsweise zu siedender Ameisensäure gegeben, so löst sich das Salz zunächst kurz auf, und es fällt anschließend sehr schnell ein weißer, flockiger, nicht näher untersuchter Niederschlag aus, der sich bei weiterer Zugabe von Zirkonylchlorid wieder löst. Diese obere Lösungsgrenze liegt bei einem Mol-Verhältnis HCOOH : ZrOCl₂ x 8H₂O von 24 : 1, bezogen auf das Kristallwasser ergibt sich ein Mol-Verhältnis HCOOH : H₂O von 3 : 1. Die entstandene Lösung ist ein sehr gutes Lösemittel für weiteres Zirkonylchlorid. Erst bei einem Mol-Verhältnis HCOOH : ZrOCl₂ x 8H₂O von 1 : 1, bzw. HCOOH : H₂O (Kristallwasser) von 1 : 8, wird das zur Lösung hinzugegebene Salz nicht mehr gelöst.

Zur Erzielung von sinterfähigen Pulvern ist es erfindungsgemäß nicht unbedingt erforderlich, innerhalb dieser Lösungsgrenzen zu arbeiten, sondern es ist auch möglich, zu der jeweils oberhalb oder unterhalb der Lösungsgrenze vorliegenden Suspension den Stabilisator oder seinen Precursor hinzuzugeben und die Suspension einzudampfen. In diesen Fällen muß die Homogenisierung der Einsatzstoffe bzw. Zwischenprodukte während des Eindampfvorganges und hauptsächlich während des Calcinier- und Sintervorganges erfolgen. Da hierbei jedoch der Vorteil der molekularen Verteilung des Stabilisators bzw. seines Precursors innerhalb einer Lösung nicht genutzt wird, wird bevorzugt innerhalb der Lösungsgrenzen von Zirkonylchlorid in Ameisensäure gearbeitet. Das erfindungsgemäß bevorzugte Mol-Verhältnis von HCOOH : ZrOCl₂ x 8H₂O beträgt daher 24 : 1 bis 1 : 1, und da die zum Lösen der Ausgangsverbindungen verwendete Menge an Ameisensäure wieder abgedampft werden muß, werden Mol-Verhältnisse HCOOH : ZrOCl₂ x 8H₂O von 10 : 1 bis 1 : 1 besonders bevorzugt und ganz besonders solche von 3 : 1 bis 1 : 1.

Für die meisten Einsatzzwecke wird das Zirkondioxid in mehr oder weniger stabilisierter Form eingesetzt. Als Stabilisatoren werden die Oxide und ihre Gemische von Yttrium, Cer, Seltene Erden, Calcium und Magnesium eingesetzt. Für hochwertige Zirkondioxid-Pulver werden die Oxide nicht direkt, sondern in Form von Precursor - Verbindungen, die beim Calcinieren in die oxidische Form übergehen - eingesetzt. Als Precursor kommen z. B. Hydroxide, Halogenide, Carbonate und organische Verbindungen, wie z. B. organische Salze oder organische Komplexe, in Frage. Bei dem erfindungsgemäßen Verfahren werden z. B. bevorzugt die Chloride verwendet, da auch die Ausgangsverbindung für das ZrO₂ in der Chlorid-Form eingesetzt wird.

An Stabilisator, z. B. Yttrium- oder Magnesiumoxid, wird die in der Technik übliche Menge eingesetzt. Sie richtet sich danach, ob teil- oder vollstabilisiertes Zirkondioxid-Pulver hergestellt werden soll. Für mit Y₂O₃ teilstabilisiertes ZrO₂ beträgt sie z. B. im allgemeinen bis zu 7 Massenprozent, besonders zwischen 0,1 und 6 und ganz besonders zwischen 2,6 und 5 Massenprozent. Für vollstabilisiertes ZrO₂ liegen die Mengen dagegen zwischen 7 und 15, vorzugsweise zwischen 8 und 10 Massenprozent, wobei die Grenzen zwischen Voll- und Teilstabilisierung in Abhängigkeit von den übrigen Pulvereigenschaften und den Sinterbedingungen fließend sind.

Das Auflösen des Zirkonylchlorids und des Stabilisatorchlorids in der Ameisensäure kann gemeinsam erfolgen, es ist jedoch auch möglich, die Verbindungen separat in Ameisensäure zu lösen und die Lösungen anschließend zu vereinen. Es kann aber auch zunächst nur eine Komponente gelöst und die entstehende Lösung zu dem anderen Salz hinzugegeben werden, so daß sich dieses in der zugegebenen Lösung auflöst. Das Herstellen der Lösung kann in Abhängigkeit von dem Verhältsnis Salz : Ameisensäure einmal durch Zugabe der Salze zur heißen Ameisensäure erfolgen, zum anderen durch Dispergieren der Salze in Ameisensäure bei Raumtemperatur und anschließendem Erhitzen der Dispersion bis zum Siedepunkt der Ameisensäure. Nach dem Lösen der Salze wird die Lösung bis zu Trockne eingedampft. Der Eindampf-Vorgang kann, vor allem gegen Ende, durch Anlegen eines Vakuums unterstützt werden. Zusätzlich kann das Eindampfen durch Einleiten eines unter den Eindampfbedingungen inerten Gases, wie z. B. Luft oder Stickstoff, weiter beschleunigt werden. Die Bad- oder Ofentemperatur kann während des Eindampfens konstant gehalten oder auch gesteigert werden. Der als Pulver vorliegende eingetrocknete Rückstand wird anschließend durch Steigerung der Temperatur in Gegenwart von Luft calciniert.

Die Calciniertemperatur kann in Abhängigkeit vom Stabilisator je nach der gewünschten Kritallitgröße des ZrO₂ und der Härte der Agglomerate in weiten Grenzen schwanken. Die untere Temperaturgrenze wird durch die Bedingung festgelegt, daß die Reste von Ameisensäure und Chlor aus der Probe weitestgehend entfernt sein müssen und das Produkt in kristallisierter Form vorliegt, es sei denn, daß für bestimmte Einsatzzwecke amorphes Material gewünscht wird. Die obere Grenze ist bedingt durch den einsetzenden Sintervorgang. Im allgemeinen betragen die Calciniertemperaturen 800 bis 1 450 K. Für die Yttrium-stabilisierten Pulver werden bevorzugt Calciniertemperaturen von 800 bis 1 300 K, für die Magnesium- und Cer-stabilisierten Pulver bevorzugt solche von 1 000 bis 1 280 K gewählt. Die Calcinierdauer richtet sich nach der Calciniertemperatur. In der Regel ist eine Calcinierdauer von 3 bis 4 ks ausreichend. Die Calcinierung wird in der Regel durch einen schwachen Strom eines in der Regel sauerstoffhaltigen Gases, wie z. B. Luft, unterstützt. Nach dem Calcinieren wird das erhaltene Pulver gegebenenfalls durch Mahlen, das trocken oder in einer Flüssigkeit, wie z. B. Wasser, Ameisensäure oder Alkohole, erfolgen kann, und gegebenenfalls Sieben auf die gewünschte Teilchengröße gebracht.

Das erfindungsgemäße Verfahren kann einstufig erfolgen, indem das Auflösen der Salze und das Eindampfen der Lösung sowie das Calcinieren des erhaltenen Pulvers in einem einzigen Behälter, wie z. B. in einem für hohe Temperaturen ausgelegten Trommel- oder Drehrohrofen, erfolgt. Die Temperatur des Apparates wird durch ein entsprechendes Temperaturprogramm gesteuert. Das Verfahren kann jedoch auch mehrstufig durchgeführt werden, indem das Auflösen der Salze und das Eindampfen der Lösung in einem Behälter, wie z. B. einem Rührkessel, und das Calcinieren in einem separaten Apparat, wie z. B. einem Drehrohrofen, vorgenommen wird. Die für die Apparate verwendeten Konstruktionsmaterialien müssen gegen Ameisensäure und Salzsäure resistent sein. Für den Hochtemperatur-Bereich werden bevorzugt Aluminiumoxid oder Zirkondioxid eingesetzt, es kann aber auch z. B. Quarz verwendet werden.

Die erfindungsgemäß hergestellten und in der Regel stabilisierten Zirkondioxid-Pulver besitzen kleine Kristallite und weisen einen sehr lockeren Agglomeratzustand mit einer in der Regel nur schwach ausgeprägten bimodalen Porenverteilung auf. Die Pulver lassen sich gut zu Grünlingen mit hoher Dichte verpressen und führen schließlich zu transluszenten, im gewünschten Maße mechanisch und thermisch belastbaren Sinterkörpern.

Anhand der nachfolgenden Beispiele wird die Erfindung näher erläutert. Die in der Anmeldung verwendeten Abkürzungen, Prüf- und Meßverfahren sind nachfolgend zusammengestellt:

### EDX

Die Elementverteilung in den Proben wurde mit einem handelsüblichen EDAX-Gerät (Typ: EDAX 9900), angeschlossen an ein handelsübliches Rasterelektronenmikroskop, nach der Methode der energiedispersiven Röntgenanalyse (EDX) durchgeführt. Die Auflösung betrug ca. 25 nm.

### REM

Handelsübliches Rasterelektronenmikroskop

### STEM

Handelsübliches Transmissions-Rasterlektronenmikroskop

### Porenstruktur-Verteilung

Die Porenstruktur-Verteilung wurde mit einem handelsüblichen Hg-Hochdruckporosimeter der Firma Carlo Erba untersucht.

### Oberfläche

Die Oberfläche der Pulver wurde mit einem handelsüblichen Gerät nach der BET (Brunauer-Emmett-Teller)-Methode (N₂) und mit einem handelsüblichen Hg-Porosimeter der Firma Carlo Erba bestimmt.

### Kristallphase

Die Kristallstruktur wurde mit einem handelsüblichen Gerät mit Hilfe der Röntgenbeugungsanalyse ermittelt.

### Kristalldurchmesser

Der Durchmesser der Kristallite wurde durch Ausmessen der Kristallite in den STEM-Aufnahmen und aus den Einzelpeaks der Röntgenbeugungsaufnahmen erhalten. Als Difraktometer wurde ein handelsübliches Gerät der Firma Philips (Typ: PW 1800) verwendet.

### Sinterverhalten

Die Kinetik des Sinterns der Proben (Längenänderung als Funktion der Temperatur) wurde mit einem handelsüblichen Dilatometer der Fa. Baehr verfolgt.

### Chlorgehalt

Der Chlorgehalt der Proben wurde mit einem handelsüblichen Gerät nach der Röntgenfluoreszenzmethode bestimmt.

### Härte der Agglomerate

Da es für die Bestimmung der Härte der Agglomerate keine allgemein übliche Methode gibt, wurde sie qualitativ - und nur in Relation der Produkte zueinander - durch Zerreiben der Pulver zwischen zwei Glasscheiben mit den Fingern ermittelt.

### Vickershärte

Die Härte der gesinterten Proben wurde nach der Methode von Vickers bestimmt (DIN 50 351).

### Beispiel 1

40,5 g YCl₃ x 6H₂O werden in 1000 g Ameisensäure gelöst und die Lösung unter Rühren zu 750 g ZrOCl₂ x 8H₂O zugegeben. Die entstehende Suspension wird noch 3,6 ks gerührt und anschließend in einem drehenden Kolben innerhalb von 7 ks auf 473 K erwärmt. Bei ca. 365 K geht die Suspension in eine klare Lösung über, und Wasser, Chlorwasserstoff und Ameisensäure dampfen ab. Die Lösung wird bis zur Trockne eingedampft und der Rückstand unter einem schwachen Luftstrom (ca. 35 cm³/s) 3,6 ks bei 1070 K calciniert. Das calcinierte Pulver wird in einer Kugelmühle in Wasser gemahlen und getrocknet. Das erhaltene Pulver besteht laut Röntgenbeugungsaufnahme aus Kristalliten mit einem Durchmesser von ca. 16 nm, die laut REM-Aufnahme Agglomerate mit einem Durchmesser von 100 bis 150 nm bilden. In den STEM-Aufnahmen sind die Kristallite nicht eindeutig auszumessen. Das Phasenverhältnis monoklin : tetragonal beträgt 60 : 40. Die BET-Oberfläche des Pulvers beträgt 22 m²; mit der Hg-Porosimetrie-Methode wird eine Oberfläche von 20 m² gefunden.

Aus dem Pulver werden mit einem Druck von 100 MPa Tabletten gepreßt, die 7,2 ks bei 1820 K gesintert werden. Im Dilatogramm ist ein Sintermaximum bei 1467 K zu erkennen. Die gesinterten Tabletten sind transluszent und weisen eine Vickershärte von 11,8 GPa auf. Im Schliffbild sind keine Poren zu erkennen.

### Beispiel 2

In 200 g HCOOH werden bei 369 K 2 g ZrOCl₂ x 8H₂O aufgelöst. Nach einigen Sekunden fällt ein weißer Niederschlag aus, der sich nach der portionsweisen Zugabe von weiteren 56 g ZrOCl₂ x 8H₂O wieder löst. Die Lösung wird nach dem Auflösen von 3,13 g YCl₃ x 6H₂O bis zur Trockne eingedampft und der Rückstand in einem schwachen Luftstrom 3,6 ks bei 1070 K calciniert. Das Produkt wird in einer Kugelmühle in Wasser gemahlen, getrocknet und gesiebt. In den REM-Aufnahmen sind lockere Agglomerate mit einem Durchmesser von 50 bis 100 nm zu erkennen, die laut STEM-Aufnahme aus Kristalliten mit einem Durchmesser von 10 bis 25 nm bestehen und eine gleichmäßige Y-Verteilung aufweisen. Aus den Röntgenbeugungsaufnahmen ergibt sich ein Phasenverhältnis monoklin : tetragonal von 74 : 26 und die zugehörigen Kristallit-Durchmesser betragen 22 nm bzw. 14 nm. Das Pulver besitzt nach der Hg-Porosimetrie-Methode eine Oberfläche von 12,8 m²/g.

### Beispiel 3

Zu 200 g HCOOH werden in kleinen Portionen unter starkem Rühren bei 373 K insgesamt 1300 g ZrOCl₂ x 8H₂O hinzugegeben. Die entstehenden Dämpfe werden mit Hilfe eines schwachen Luftstromes abgeführt. Nach der Zugabe der ersten Portion bildet sich eine klare Lösung aus der nach einigen Sekunden ein weißer Niederschlag ausfällt. Die milchige Suspension geht nach der Zugabe von ca. 70 g ZrOCl₂ x 8H₂O in eine Lösung über. Nachdem insgesamt 1300 g ZrOCl₂ x 8H₂O hinzugegeben worden sind, löst sich weiteres ZrOCl₂ x 8H₂O nicht mehr. Nicht gelöstes Salz wird durch Zugabe von ca. 20 g HCOOH in Lösung gebracht. In dieser Lösung werden anschließend 70,2 g YCl₃ x 6H₂O aufgelöst. Die Gesamt-Lösung wird bis zur Trockne eingedampft und der Rückstand in einem schwachen Luftstrom 3,6 ks bei 1073 K calciniert. Der calcinierte Rückstand wird in einer Kugelmühle in Wasser gemahlen, getrocknet und gesiebt. Das erhaltene Pulver besteht zu 40 % aus tetragonaler und zu 60 % aus monokliner Phase und die zugehörigen Kristallite besitzen laut Röntgendifraktogramm einen Durchmesser von 24 bzw. 29 nm. In den REM- und STEM-Aufnahmen sind keine größeren Agglomerate erkennbar, und die STEM/EDX-Spektren zeigen eine gleichmäßige Yttrium-Verteilung. Die Oberfläche des Pulvers beträgt nach der BET-Methode 29 m²/g und nach der Hg-Methode 19 m²/g.

Aus diesem Pulver werden mit einem Druck von 100 MPa Tabletten hergestellt, die im Dilatometer ein Sintermaximum bei 1460 K aufweisen. Bei 1800 K gesinterte Tabletten schimmern z. T. grünlich und sind transluszent. Sie bestehen zu > 99 % aus tetragonaler Phase mit Korndurchmessern von 300 bis 500 nm. Die Dichten der Tabletten betragen 6,01 bis 6,03 g/cm³, und die Vickershärten liegen bei ca. 11,8 GPa. In den Schliffbildern sind keine Poren zu erkennen.

### Beispiel 4

750 g ZrOCl₂ x 8H₂O werden bei 363 K in 800 g HCOOH aufgelöst und mit einer Lösung von 40,5 g YCl₃ x 6H₂O in 200 g HCOOH gemischt. Die Gesamt-Lösung wird bei 410 K eingedampft und anschließend noch 7 ks bei 470 K getrocknet. Der Rückstand wird in einem schwachen Luftstrom 3,6 ks bei 1070 K calciniert. Das calcinierte Produkt wird in einer Kugelmühle in Wasser gemahlen, getrocknet, gesiebt und analysiert: Die Oberfläche des Pulvers beträgt nach der BET-Methode 34 m²/g und nach der Hg-Porosimetriemethode 13 m²/g. Das Phasenverhältnis tetragonal : monoklin ist 48 : 52 und die Kristallite haben einen Durchmesser von 9,5 nm (tetragonal) und 20 nm (monoklin). In den REM-Aufnahmen sind lockere Agglomerate mit einem Durchmesser von ca. 100 nm erkennbar. Die STEM-EDX-Spektren zeigen eine homogene Y-Verteilung.

Aus dem Pulver hergestellte und 7 ks bei 1820 K gesinterte Tabletten sind transluszent und bestehen zu 98 % aus tetragonaler und zu 2 % aus monokliner Phase mit einem Korndurchmesser von ca. 230 nm. Die gemessenen Vickershärten liegen zwischen 12,3 und 12,75 GPa.

### Beispiel 5

1341 g ZrOCl₂ x 8H₂O und 200 g HCOOH werden gemeinsam auf 308 K erhitzt. Zu der entstehenden Lösung werden 78,2 g YCl₃ x 6H₂O, gelöst in 200 g HCOOH, hinzugegeben. Die Gesamt-Lösung wird bei 420 K bis zur Trockne eingedampft der Rückstand bei 470 K im Vakuum getrocknet und anschließend in einem leichten Luftstrom in einem Röhrenofen 7,2 ks bei 1070 K calciniert. Das calcinierte Produkt wird in Wasser gemahlen, getrocknet und gesiebt. Die Oberfläche des erhaltenen Pulvers beträgt nach der BET-Methode 33 m²/g und nach der Hg-Porosimetriemethode 21 g/m². Aus dem Pulver werden mit einem Druck von 100 MPa Tabletten hergestellt, die bei 1870 K 7,2 ks gesintert werden. Die Dichte der transluszenten Tabletten beträgt 6,04 g/cm³, und im Schliffbild sind keine Poren zu erkennen. Die Tabletten bestehen zu 99 % aus tetragonaler Phase und die Vickershärte beträgt 12,1 GPa.

### Beispiel 6

Der Versuch von Beispiel 1 wird wiederholt mit dem Unterschied, daß sämtliche Verfahrensschritte in einem einzigen Gefäß aus Quarz durchgeführt werden. Das erhaltene Pulver weist annähernd die gleichen Eigenschaften wie das in Beispiel 1 beschriebene Pulver auf. Das Phasenverhältnis monoklin : tetragonal beträgt 55 : 45.

### Beispiel 7

Der Versuch von Beispiel 1 wird mit den Abänderungen wiederholt, daß, wie in Beispiel 6 beschrieben, sämtliche Verfahrensschritte in einem einzigen Gefäß aus Quarz durchgeführt werden und zusätzlich bei der Calcinierung während des Aufheizens die folgenden Haltestufen eingebaut werden: 270 K/2 ks, 410 K/3,6 ks, 470 K/7 ks und 1070 K/3,6 ks. Aus den STEM- und Röntgenbeugungsaufnahmen ist ersichtlich, daß die tetragonalen Kristallite einen mittleren Durchmesser von ca. 17 nm und die monoklinen Kristallite einen mittleren Durchmesser von ca. 58 nm besitzen.

### Beispiel 8

Der Versuch von Beispiel 5 wird mit der Abänderung wiederholt, daß die Calcination nicht in einem Röhrenofen, sondern in einem Drehrohrofen durchgeführt wird. Die Verweilzeit des Produktes in dem Drehrohrofen beträgt 7 ks. Das erhaltene Pulver und die aus ihm hergestellten Tabletten zeigen keine signifikanten Unterschiede zu dem Pulver und den Tabletten des Beispieles 5.

### Beispiel 9

Der in Beispiel 5 beschriebene Versuch wird mit den Calciniertemperaturen 920 K und 1270 K wiederholt. Während das bei 920 K calcinierte Pulver in seinen Eigenschaften dem im Beispiel 5 beschriebenen sehr ähnlich ist, besitzt das bei 1270 K calcinierte Pulver laut STEM-Aufnahmen relativ große Kristallite bzw. Kristallit-Agglomerate mit einem Durchmesser von 20 bis 50 nm. Aus dem Pulver hergestellte und bei 1870 K gesinterte Tabletten besitzen nur eine Dichte von 5,5 g/cm³.

### Beispiel 10

Beispiel 1 wird wiederholt mit dem Unterschied, daß die Menge an Stabilisator auf 10 Mol-% Y₂O₃ erhöht wird. Das Phasenverhältnis tetragonal : monoklin des fertigen Pulvers beträgt 81 : 19 und die tetragonalen Kristallite besitzen einen mittleren Durchmesser von ca. 6,5 nm.

### Beispiel 11

Der in Beispiel 1 beschriebene Versuch wird wiederholt mit dem Unterschied, daß auf die Zugabe eines Stabilisators verzichtet wird und das Mol-Mengen-Verhältnis Zr-Salz : Ameisensäure 1 : 2,8 beträgt. Die aus dem erhaltenen Pulver hergestellten Tabletten zeigen im differentiellen Dilatogramm während der Abkühlphase sehr deutlich bei 1270 K den der Phasenumwandlung tetragonal -> monoklin zuzuordnenden Umwandlungs-Peak.

### Beispiel 12

Der in Beispiel 1 beschriebene Versuch wird mit dem Unterschied wiederholt, daß das ZrOCl₂ x 8H₂O in einer Schmelze von 2,2-Dimethyl-propan-1,3-Diol vorgelegt wird. Das Mol-Verhältnis ZrOCl₂ x 8H₂O : Diol beträgt 4 : 1. Das erhaltene Pulver weist ein Phasenverhältnis monoklin : tetragonal von 52 : 48 auf und besteht laut Röntgenbeugungsaufnahme aus Kristalliten mit einem Durchmesser von 16 nm (tetragonal) und 58 nm (monoklin), die gemäß der REM-Aufnahme lockere Agglomerate mit einem Durchmesser von ca. 100 nm bilden. Die übrigen Eigenschaften des Pulvers unterscheiden sich nicht wesentlich von denen des in Beispiel 1 beschriebenen Pulvers.

### Beispiel 13

96,3 g CeCl₃ x 7H₂O werden in 1000 g HCOOH gelöst. In diese Lösung werden 750 g ZrOCl₂ x 8H₂O eingerührt und die Mischung auf 371 K erwärmt. Die entstehende Lösung wird bei 420 K bis zur Trockne eingedampft und 4 ks bei 470 K im Vakuum (ca. 50 hPa) getrocknet. Der Rückstand wird in einem schwachen Luftstrom 3,6 ks bei 1270 K calciniert, in Wasser gemahlen, getrocknet und gesiebt. Das erhaltene Pulver weist ein Phasenverhältnis tetragonal : monoklin von 13 : 87 auf, und die Kristallite haben einen Durchmesser von 28 nm (tetragonal) und 35 nm (monoklin). Aus dem Pulver hergestellte und bei 1800 K (7 ks) gesinterte Tabletten besitzen eine Dichte von 6,0 g/cm³.

### Beispiel 14

Die bei 380 K hergestellten Lösungen von 1099 g ZrOCl₂ x 8H₂O in 157 g HCOOH und 317 g CeCl₃ x 7H₂O in 157 g HCOOH werden gemischt und bei 420 K bis zur Trockne eingedampft und anschließend noch 1 ks in einem Vakuum von ca. 80 hPa bei 470 K nachgetrocknet. Der Rückstand wird in einem leichten Luftstrom (ca. 35 cm³/s) 3,6 ks bei 1370 K calciniert, in Wasser gemahlen, getrocknet und gesiebt. Aus dem Pulver werden Tabletten hergestellt, die bei 1820 K 7 ks gesintert werden. Die Dichte der Tabletten beträgt 6,26 g/cm³.

### Beispiel 15

Eine Lösung von 64,52 g MgCl₂ x 6H₂O (12 Mol-% bezogen auf ZrO₂) in 1000 g HCOOH wird zu 750 g ZrOCl₂ x 8H₂O gegeben. Die entstehende Mischung wird durch Erwärmen auf 380 K in Lösung gebracht und anschließend bei 420 K bis zu Trockne eingedampft und im Vakuum bei 470 K nachgetrocknet. Das erhaltene Pulver wird in einem schwachen Luftstrom 3,6 ks bei 1120 K calciniert und nach dem Mahlen im Wasser, Trocknen und Sieben zu Tabletten gepreßt, die bei 1820 K 7,2 ks gesintert werden. Die gesinterten Tabletten sind transluszent und besitzen eine Dichte von 5,58 g/cm³.

### Beispiel 16

Die bei 365 K hergestellten Lösungen von 118,3 g MgCl₂ x 6H₂O in 100 g HCOOH (20 Mol-% bezogen auf ZrO₂) und von 750 g ZrOCl₂ x 8H₂O in 900 g HCOOH werden gemischt und, wie in Beispiel 15 beschrieben, weiterverarbeitet. Das Pulver besitzt eine BET-Oberfläche von 28 m²/g und eine nach der Hg-Porosimetrie-Methode bestimmte Oberfläche von 16 m²/g. Das Phasenverhältnis tetragonal : monoklin ist 41 : 59, und die tetragonalen Kristallite haben einen Durchmesser von ca. 15 nm und die monoklinen einen von ca. 23 nm.

### Beispiel 17

Die bei 370 K hergestellten Lösungen von 1400 g ZrOCl₂ x 8H₂O in 200 g HCOOH und von 120,4 MgCl₂ x 6H₂O in 200 g HCOOH werden wie bereits beschrieben zu einem Pulver verarbeitet, das bei 1170 K 3,6 ks calciniert wird. Aus dem calcinierten, gemahlenen und gesiebten Pulver werden mit einem Preßdruck von 100 MPa Tabletten hergestellt, die nach dem Sintern bei 1870 K (7,2 ks) transluszent sind und eine Dichte von 5,4 g/cm³ aufweisen.

### Vergleichsbeispiel

100,0 g ZrOCl₂ x 8H₂O und 5,2 g YCl₃ x 6H₂O werden in einem rotierenden Glaskolben bei einer Badtemperatur von 470 K aufgeschmolzen, und anschließend wird die Schmelze bis zur Trockne eingedampft. Der erhaltene Rückstand wird gemahlen und unter einem leichten Luftstrom 3,6 ks bei einer Temperatur von 1073 K calciniert. Das erhaltene Produkt besteht aus harten Agglomeraten mit einem Durchmesser von 0,5 bis 1 µm, die sich nicht zu hochdichten Formkörpern verpressen und sintern lassen.

## Patentansprüche

1. Verfahren zur Herstellung von Zirkondioxidpulver,
dadurch gekennzeichnet,
daß Zirkonylchlorid (ZrOCl₂ x 8H₂O) in konzentrierter Ameisensäure gelöst wird und die Lösung durch Abdampfung von Wasser, Chlorwasserstoff und Ameisensäure eingetrocknet, das Reaktionsprodukt bei erhöhter Temperatur calciniert und das calcinierte Produkt gegebenenfalls gemahlen wird.

2. Verfahren nach Anspruch 1,
dadurch gekennzeichnet,
daß das Zirkonylchlorid zusammen mit einem Stabilisator oder seinem Precursor eingesetzt wird.

3. Verfahren nach Anspruch 2,
dadurch gekennzeichnet,
daß als Stabilisatoren die Oxide von Yttrium, Cer, Magnesium und den Seltenen Erden und Gemische dieser Oxide verwendet werden.

4. Verfahren nach Anspruch 2,
dadurch gekennzeichnet,
daß als Precursor für die Stabilisatoren die Chloride der Stabilisatorelemente eingesetzt werden.

5. Verfahren nach den Ansprüchen 1 bis 4,
dadurch gekennzeichnet,
daß das Mol-Verhältnis Zirkonylchlorid : Ameisensäure 1 : 24 bis 1 : 1 beträgt.

6. Verfahren nach Anspruch 5,
dadurch gekennzeichnet,
daß das Mol-Verhältnis Zirkonylchlorid : Ameisensäure 1 : 10 bis 1 : 1 beträgt.

7. Verfahren nach Anspruch 6,
dadurch gekennzeichnet,
daß das Mol-Verhältnis Zirkonylchlorid : Ameisensäure 1 : 3 bis 1 : 1 beträgt.

## Claims

1. A process for the production of zirconium dioxide powder, characterised in that zirconyl chloride (ZrOCl₂.8H₂O) is dissolved in concentrated formic acid and the solution is dried by evaporation of water, hydrogen chloride and formic acid, the reaction product is calcined at elevated temperature and the calcined product is ground if necessary.

2. A process according to claim 1, characterised in that the zirconyl chloride is used together with a stabiliser or a precursor thereof.

3. A process according to claim 2, characterised in that oxides of yttrium, cerium, magnesium and rare earths and mixtures of these oxides are used as stabilisers.

4. A process according to claim 2, characterised in that the chlorides of the stabiliser elements are used as precursors for the stabilisers.

5. A process according to any of claims 1 to 4, characterised in that the mole ratio of zirconyl chloride to formic acid is from 1:24 to 1:1.

6. A process according to claim 5, characterised in that the mole ratio of zirconyl chloride to formic acid is from 1:10 to 1:1.

7. A process according to claim 6, characterised in that the mole ratio of zirconyl chloride to formic acid is from 1:3 to 1:1.

## Revendications

1. Procédé de préparation d'oxyde de zirconium en poudre,
caractérisé par le fait que l'on dissout du chlorure de zirconyle (ZrOCl₂ x 8 H₂O) dans de l'acide formique concentré et que l'on concentre la solution par évaporation de l'eau, de l'acide chlorhydrique et de l'acide formique, que l'on calcine le produit réactionnel à température élevée et que l'on broie éventuellement le produit calciné.

2. Procédé selon la revendication 1,
caractérisé par le fait que le chlorure de zirconyle est utilisé conjointement avec un stabilisant ou son précurseur.

3. Procédé selon la revendication 2,
caractérisé par le fait que l'on utilise, comme stabilisants, les oxydes d'yttrium, de cérium, de magnésium et des terres rares et des mélanges de ces oxydes.

4. Procédé selon la revendication 2,
caractérisé par le fait que l'on utilise, comme précurseur pour les stabilisants, les chlorures des éléments du stabilisant.

5. Procédé selon les revendications 1 à 4,
caractérisé par le fait que le rapport molaire chlorure de zirconyle : acide formique est de 1 : 24 à 1 : 1.

6. Procédé selon la revendication 5,
caractérisé par le fait que le rapport molaire chlorure de zirconyle : acide formique est de 1 : 10 à 1 : 1.

7. Procédé selon la revendication 6,
caractérisé par le fait que le rapport molaire chlorure de zirconyle : acide formique est de 1 : 3 à 1 : 1.
